Europäisches Patentamt

European Patent Office

Office européen des brevets

(11) Veröffentlichungsnummer: **0 297 223 B1**

(12) **EUROPÄISCHE PATENTSCHRIFT**

(45) Veröffentlichungstag der Patentschrift: **10.06.92**

(21) Anmeldenummer: **88105505.7**

(22) Anmeldetag: **07.04.88**

(51) Int. Cl.⁵: **H01H 25/04**, B60R 16/02

(54) **Steuereinheit zur Handsteuerung von reversierbaren elektrischen Verstelleinrichtungen.**

(30) Priorität: **27.06.87 DE 3721267**

(43) Veröffentlichungstag der Anmeldung:
**04.01.89 Patentblatt 89/01**

(45) Bekanntmachung des Hinweises auf die
Patenterteilung:
**10.06.92 Patentblatt 92/24**

(84) Benannte Vertragsstaaten:
**ES FR GB IT SE**

(56) Entgegenhaltungen:
**EP-A- 0 274 848**
**DE-A- 2 506 073**
**DE-C- 2 506 073**
**FR-A- 1 372 453**
**FR-A- 2 507 982**

(73) Patentinhaber: **DAIMLER-BENZ AKTIENGE-
SELLSCHAFT**
**Mercedesstrasse 136**
**W-7000 Stuttgart 60(DE)**

(72) Erfinder: **Krieg, Karl-Heinz**
**Schorndorfer-Strasse 9**
**W-7333 Ebersbach(DE)**
Erfinder: **Klink, Siegfried**
**Gotenweg 9**
**W-7036 Schönaich(DE)**

EP 0 297 223 B1

**Beschreibung**

Die Erfindung bezieht sich auf eine Steuereinheit mit den Merkmalen des Oberbegriffs des Patentanspruchs 1.

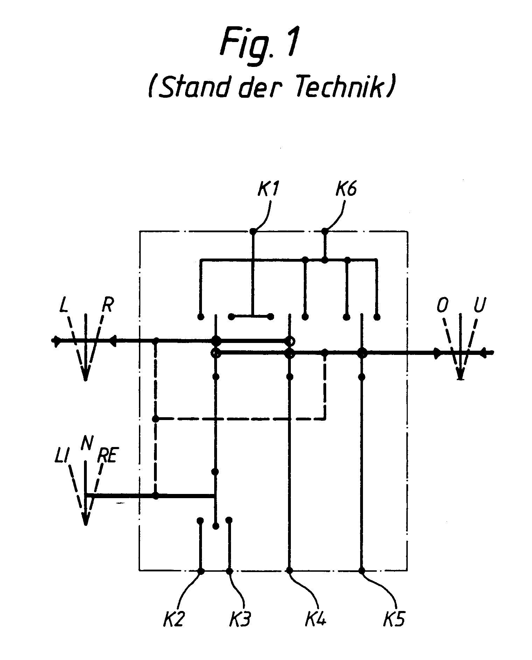

Eine gattungsgemäße Steuereinheit ist bekannt (Figur 1), welche der Auswahl jeweils eines von zwei fernbedient verstellbaren Rückblickspiegeln und der Handsteuerung der zwei in jedem Spiegel vorgesehenen reversierbaren elektrischen Verstelleinrichtungen mittels einer Hebelbandhabe in der Art eines kurzen Steuerknüppels dient. Die Spiegelauswahl erfolgt durch Drehen der Hebelhandhabe aus einer stabilen Neutralstellung in eine rechte oder eine linke Schaltstellung, entsprechend der Lage des auszuwählenden Außen-Rückblickspiegels.

Die Handsteuerung der Verstelleinrichtungen erfolgt in bekannter Weise durch Kippen der Hebelhandhabe aus einer stabilen Mittellage gegen eine zentrierende Rückstellkraft nach vorn oder hinten (Spiegel wird um seine Querachse verschwenkt) bzw. nach rechts oder links (Spiegel wird um seine Hochachse verschwenkt).

Für die Verstellung eines einzelnen - beifahrerseitigen -Außen-Rückblickspiegelssind derartige Steuerschaltereinheiten bereits bekannt.

Schließlich ist aus der EP-A 0 186 192 ebenfalls ein Spiegelverstellschalter mit Wahlmöglichkeit für zwei verschiedene Rückblickspiegel bekannt, bei welchem jedoch die Auswahl des Spiegels und die Handsteuerung der Verstelleinrichtungen mittels zweier mechanisch voneinander unabhängiger handhaben erfolgt.

Derartige Spiegelverstellschalter werden im allgemeinen in die Mittelkonsolen von PKW eingebaut und dürfen dort nur wenig Platz beanspruchen.

An sich ist es bereits bekannt, mit einer Memory-Schaltung sowohl Sitz- als auch Rückblickspiegelstellungen auf Knopfdruck abrufbar zu speichern. Dies erfordert - z.B. in Kombilimousinen - auch eine Fremdkraftverstellung von bis zu drei Rückblickspiegeln - zwei außen, einer innen angeordnet.

Der Erfindung liegt die Aufgabe zugrunde, eine gattungsgemäße Steuereinheit so auszubilden, daß bei möglichst kompakter Form und möglichst geringer Anzahl von elektrischen Anschlüssen einer in beengtem Raum unterzubringenden Anordnung die Handsteuerung der jeweils zwei Verstelleinrichtungen dreier Rückblickspiegel ermöglicht wird. Diese Aufgabe wird erfindungsgemäß mit den kennzeichnenden Merkmalen des Hauptanspruchs gelöst.

Durch Aufteilung der Steuereinheit in eine Schalteranordnung für die Mittelkonsole und eine Decodier- und Steuerschaltung, die von der Schalteranordnung räumlich getrennt eingebaut wird und durch eine vieladrige Steuerleitung mit der Schaltereinheit elektrisch verbunden ist -wobei die Steuerleitung wenigstens einen vierstelligen Binärcode überträgt, welcher sowohl die einzelnen Spiegel als auch die jeweilige Verstelleinrichtung und deren gewünschte Verstellrichtung adressiert - ,

kann gegenüber der bekannten Steuereinheit die bauliche Größe unverändert beibehalten werden und die Anzahl der für die Verstelleinrichtungs-Handsteuerung benötigten Anschlußklemmen an der Schalteranordnung sogar auf fünf begrenzt werden.

Die kennzeichnenden Merkmale der Unteransprüche offenbaren vorteilhafte Weiterbildungen der erfindungsgemäßen Steuereinheit.

In der Zeichnung ist sowohl die gattungsgemäße Steuereinheit als auch ein ausführungsbeispiel einer erfindungsgemäßen Steuereinheeit dargestellt. Aufbau und Funktion werden in der folgenden Beschreibung verdeutlicht.

Es zeigen:

Figur 1    ein Schaltschema der bekannten Steuereinheit (Stand der Technik) ,
Figur 2    ein Schaltschema der erfindungsgemäßen Steuereinheit und
Figur 3    eine Teilansicht einer Schalteranordnung.

An der bekannten Steuereinheit gemäß Figur 1 sind sechs Anschlußklemmen K 1, K 2, K 3, K 4, K 5 und K 6 vorgesehen. Sie enthält ferner einen Wählschalter, der in drei stabile Schaltstellungen RE, N, LI geschaltet werden kann und dessen Schaltbrücke in der Schaltstellung

- RE mit Klemme K 2,
- LI mit Klemme K 3,
- N mit keiner von beiden Klemmen verbunden ist.

Ferner sind drei Wechseltaster mit je einer beweglichen Schaltbrücke, zwei Festkontakten und einer neutralen Mittellage vorgesehen.

Die Schaltbrücke des ersten, in Fig. 1 links dargestellten Wechseltasters ist mit der Schaltbrücke des Wählschalters elektrisch dauernd verbunden.

2

Je ein Festkontakt sowohl des ersten Wechseltasters als auch des - in der Mitte dargestellten - zweiten Wechseltasters ist an Klemme K 1 angeschlossen, während jeweils der zweite Festkontakt des ersten und des zweiten Wechseltasters sowie beide Festkontakte des dritten -rechts dargestellten - Wechseltasters gemeinsam mit der Anschlußklemme K 6 verbunden sind.

Die Schaltbrücke des zweiten Wechseltasters ist mit der Anschlußklemme K 4 und die Schaltbrücke des dritten Wechseltasters ist mit der Anschlußklemme K 5 dauernd verbunden.

An der zylindrisch geformten Hebelhandhabe und am Sockel der bekannten Steuereinheit/Schalteranordnung sind zur optischen Kennzeichnung der Stellung der Hebelhandhabe - RE, N, LI - bzw. des Wählschalters Farbmarkierungen vorgesehen.

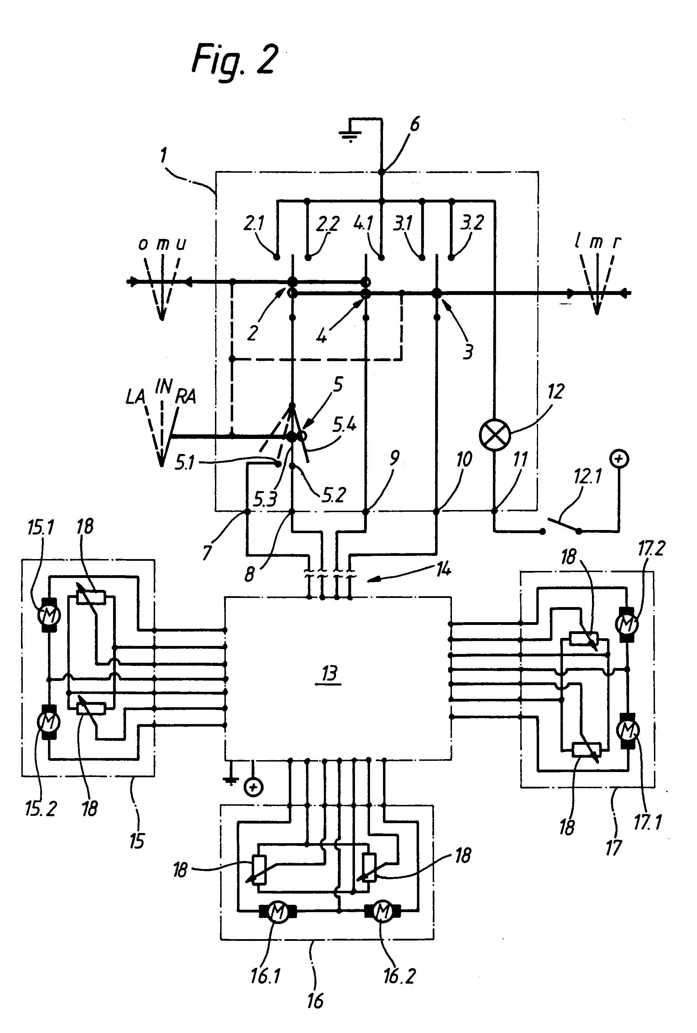

Wie aus dem Schaltschema der Figur 2 ersichtlich ist, besteht die erfindungsgemäße Steuereinheit zum einen aus einer Schalteranordnung 1
- mit einem ersten Tastschalter 2, der als Wechseltaster mit einem ersten Festkontakt 2.1 und einem zweiten Festkontakt 2.2 ausgebildet ist,
- mit einem zweiten Tastschalter 3, der ebenfalls als Wechseltaster mit einem ersten Festkontakt 3.1 und einem zweiten Festkontakt 3.2 ausgebildet ist, wobei sowohl der erste Tastschalter 2 als auch der zweite Tastschalter 3 eine neutrale Mittelstellung (dargestellt) ihrer Schaltbrücke haben,
- mit einem dritten Tastschalter 4 mit einem Festkontakt 4.1,
- mit einem Wählschalter 5, der drei stabile Schaltstellungen RA, IN, LA einnehmen kann, einen ersten Festkontakt 5.1 und einen zweiten Festkontakt 5.2 aufweist und dessen Schaltbrücke aus zwei mechanisch gekoppelten beweglichen Kontaktstücken 5.3 und 5.4 gebildet ist, die beide mit der Schaltbrücke des ersten Wechseltasters 2 dauernd elektrisch verbunden sind,
- mit einer gemeinsamen Anschlußklemme 6, mit der alle Festkontakte 2.1, 2.2, 3.1, 3.2 und 4.1 der drei Tastschalter 2, 3 und 4 elektrisch verbunden sind,
- mit vier weiteren Anschlußklemmen 7, 8, 9 und 10, wobei

| Klemme 7 | mit dem ersten Festkontakt 5.1 des Wählschalters 5, |
| Klemme 8 | mit dem zweiten Festkontakt 5.2 des Wählschalters 5, |
| Klemme 9 | mit der Schaltbrücke des dritten Tastschalters 4 und |
| Klemme 10 | mit der Schaltbrücke des zweiten Tastschalters/Wechseltasters 3 elektrisch verbunden ist, |

- und mit einer sechsten Anschlußklemme 11, die als Versorgungsanschluß einer zwischen die gemeinsame Anschlußklemme 6 und die sechste Anschlußklemme 11 geschaltetenLichtquelle 12 an einen Lichtschalter 12.1 angeschlossen ist,
und zum zweiten aus einer Decodier- und Steuerschaltung 13, welche über eine vieradrige Leitung 14 mit den vier weiteren Anschlußklemmen 7 bis 10 der Schalteranordnung 1 verbunden ist.

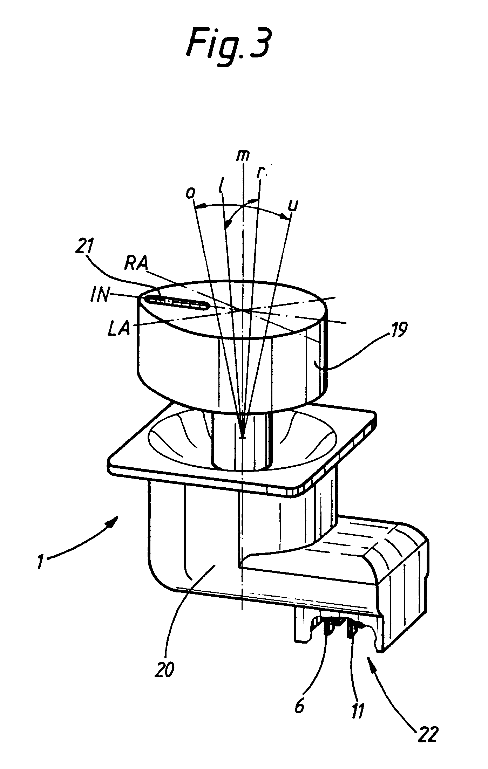

Ferner sind schematisch drei Rückblickspiegel 15, 16 und 17 dargestellt, die jeder mit zwei Verstelleinrichtungen 15.1, 15.2; 16.1, 16.2; 17.1, 17.2 sowie zwei Positionsrückführpotentiometern 18 ausgestattet und über Steuerleitungen an die Decodier- und Steuereinheit 13 angeschlossen sind. Die gestrichelten Verbindungslinien in den Figuren 1 und 2 zwischen den der Übersichtlichkeit halber je drei dargestellten Handhaben deuten symbolisch deren tatsächliche Vereinigung in einer einzigen Hebelhandhabe 19 - 2 - Achsen - Steuerknüppel oder "Joystick" -an, die in Figur 3 dargestellt ist.

Durch Drehung der Hebelhandhabe um ihre Längsachse werden die beiden beweglichen Kontaktstücke 5.3 und 5.4 betätigt.

In Stellung RA ("Rechter Außenspiegel", durchgezogen dargestellt) des Tastschalters 5 liegt lediglich das Kontaktstück 5.3 am Festkontakt 5.2.

In Stellung IN ("Innenspiegel", gestrichelt) liegt das Kontaktstück 5.3 am Festkontakt 5.1 und das Kontaktstück 5.4 am Festkontakt 5.2.

In Stellung LA ("Linker Außenspiegel", gestrichelt) liegt lediglich das Kontaktstück 5.4 am Festkontakt 5.1.

Durch Kippen der Hebelhandhabe, deren Längsachse in Einbaulage im Fahrzeug wenigstens annähernd senkrecht steht, aus der Mittellage m (durchgezogen)
- in Stellung o wird der erste Tastschalter 2 an den Festkontakt 2.1 angelegt, während der gleichzeitig mitbewegte dritte Tastschalter 4 potentialfrei bleibt;
- in Stellung u liegt der erste Tastschalter 2 am Festkontakt 2.2 und der dritte Tastschalter 4 am Festkontakt 4.1 an;
- in Stellung 1 liegt der erste Tastschalter 2 am Festkontakt 2.1 und der zweite Tastschalter 3 am Festkontakt 3.1 an,
während der mitbewegte dritte Tastschalter 4 wieder potentialfrei bleibt;
- in Stellung r liegt der erste Tastschalter 2 am Festkontakt 2.2, der zweite Tastschalter 3 am Festkontakt 3.2 und der dritte Tastschalter 4 am Festkontakt 4.1 an.

Unter der Annahme, daß an der gemeinsamen Anschlußklemme 6 Minus-Potential anliegt, ergeben sich tabellarisch aufgelistet folgende möglichen Kombinationen für den an den weiteren vier Anschlußklemmen 7 - 10 anstehenden Binärcode mit den Zeichen "-" für Minus-Potential und "0" für "kein Potential":

| Stellung der Hebelhandhabe ↓ | Klemme | | | | |
|---|---|---|---|---|---|
| | 7 | 8 | 9 | 10 | |
| LA, IN, RA / m | 0 | 0 | 0 | 0 | Nullstellung |
| LA / o | - | 0 | 0 | 0 | |
| / u | - | 0 | - | 0 | |
| / l | - | 0 | 0 | - | |
| / r | - | 0 | - | - | |
| IN / o | - | - | 0 | 0 | |
| / u | - | - | - | 0 | |
| / l | - | - | 0 | - | |
| / r | - | - | - | - | |
| RA / o | 0 | - | 0 | 0 | |
| / u | 0 | - | - | 0 | |
| / l | 0 | - | 0 | - | |
| / r | 0 | - | - | - | |

Die zwölf Permutationen außer der Nullstellung genügen, um der Decodier- und Steuereinheit 13 die jeweils gewünschte Verstellrichtung einer der sechs Verstelleinrichtungen eindeutig vorzugeben.

In Figur 3 ist die Schalteranordnung 1 in perspektivischer Ansicht dargestellt.

Die hebelhandhabe 19 ist an einem Sockel 20 um eine Achse m in drei stabile Schaltstellungen RA, IN, LA drehbar und in zwei senkrecht aufeinander stehenden Ebenen aus der Achse m in Kippstellungen o - u und l - r kippbar gelagert. Sie hat eine an sich bekannte tropfenartige Zeigerform, durch welche ihre jeweilige Schaltstellung erfühlt werden kann. Ferner ist in der oberen Fläche der Hebelhandhabe 19 ein längliches Fensterfeld 21 vorgesehen, das durch die Lichtquelle 12 (Fig.2) z.B. nach Einschalten des Fahrzeugstandlichts beleuchtet wird und die Schaltstellung der Hebelhandhabe auch bei Dunkelheit optisch kennzeichnet. An einem Mehrfachsteckeranschluß 22, der sämtliche Anschlußklemmen 6 bis 11 enthält, wird eine Versorgungs- und Steuerleitung angeschlossen, die die vieradrige Leitung 14 (Fig.2) zur Decodier- und Steuerschaltung 13 (Fig.2) enthält.

Alle Schaltbrücken der Schalteranordnungen nach Figur 1 und 2 sind als hantelförmige Schaltknochen ausgeführt. Sie werden in mit der Hebelhandhabe gekoppelten Führungselementen gehalten und von Federn auf eine Leiterplatine mit aufgetragenen, den gezeichneten Verbindungen und Festkontakten entsprechenden Kontaktbahnen gedrückt.

Die Kontaktbahnen für die Tastschalter und die Kontaktbahnen für den Wählschalter verlaufen auf den beiden entgegengesetzten Seiten der Leiterplatine.

Eine Abkoppelung eines Schaltknochens von einer Bewegung der Hebelhandhabe erfolgt nur auf elektrischem Weg, indem er zwar mechanisch mitgeführt wird, jedoch in der Bewegungsrichtung mit beiden Berührpunkten auf derselben Kontaktbahn verbleibt, ohne - wie üblich - eine Verbindung zwischen zwei verschiedenen Kontaktbahnen herzustellen.

**Patentansprüche**

1. Steuereinheit zur Handsteuerung von mindestens vier reversierbaren elektromechanischen Verstelleinrichtungen, insbesondere für Kraftfahrzeug-Rückblickspiegel,

mit einer Schalteranordnung (1) aus einem mittels einer Handhabe schaltbaren Wählschalter (5), dessen Schaltbrücke in einer von drei stabilen Schaltstellungen an einem ersten Festkontakt (5.1) und in einer weiteren Schaltstellung an einem zweiten Festkontakt (5.2) des Wählschalters (5) anliegt, und aus drei mittels derselben Handhabe schaltbaren Tastschaltern (2, 3, 4),

von denen wenigstens ein erster (2) und ein zweiter (3) als Wechseltaster mit je einer je nach Bewegungsrichtung auf einen ersten (2.1; 3.1) oder auf einen zweiten (2.2; 3.2) Festkontakt schaltbaren Schaltbrücke ausgebildet ist,

wobei die Schaltbrücke des ersten Wechseltasters (2) mit der Schaltbrücke des Wählschalters (5) elektrisch dauernd verbunden ist und bei einer Handsteuerung einer Verstelleinrichtung gemeinsam mit mindestens einer anderen Schaltbrücke eines Tastschalters (2; 3; 4) bewegt wird,

mit einer gemeinsamen Anschlußklemme (6), die mit mindestens einem Festkontakt jedes der drei Tastschalter elektrisch dauernd verbunden ist und mit vier weiteren Anschlußklemmen (7, 8, 9, 10), die jeweils einzeln

- mit dem ersten Wählschalter-Festkontakt (5.1)
- mit dem zweiten Wählschalter-Festkontakt (5.2)
- mit der Schaltbrücke des zweiten (3) und
- mit der Schaltbrücke des dritten (4) Tastschalters

dauernd verbunden sind,

**dadurch gekennzeichnet,**

daß die Schaltbrücke des Wählschalters (5) der Schalteranordnung (1) in dessen dritter, vorzugsweise mittlerer Schaltstellung (IN) sowohl am ersten Festkontakt (5.1) als auch gleichzeitig am zweiten Festkontakt (5.2) des Wählschalters (5) anliegt,

daß sowohl die ersten Festkontakte (2.1; 3.1) und die zweiten Festkontakte (2.2; 3.2) des ersten (2) und des zweiten Tastschalters (3) als auch der einzige Festkontakt (4.1) des dritten Tastschalters (4) - welcher nur in einer von zwei Bewegungsrichtungen geschlossen wird - der Schalteranordnung (1) sämtlich mit der gemeinsamen Anschlußklemme (6) dauernd elektrisch verbunden sind,

und daß wenigstens die vier weiteren Anschlußklemmen (7, 8, 9, 10) mit einer räumlich entfernt angeordneten Decodier- und Steuerschaltung (13) über eine vieladrige Leitung (14) zur Übertragung eines vierstelligen Binärcodes mit den Zeichen "kein Potential" und "Potential der gemeinsamen Anschlußklemme (6)" verbunden sind,

wobei in zwei Stellen des Binärcodes

- von den mit den beiden Festkontakten (5.1, 5.2) des Wählschalters (5) verbundenen Anschlußklemmen (7, 8) her -die Adresse eines von drei Rückblickspiegeln (15, 16 oder 17) mit je zwei Verstelleinrichtungen

und in den beiden anderen Stellen

- von den mit den Schaltbrücken des zweiten (3) bzw. des dritten Tastschalters (4) verbundenen Anschlußklemmen (9, 10) her -

die jeweils angesprochene Verstelleinrichtung (15.1, 15.2; 16.1, 16.2; 17.1, 17.2) und deren gewünschte Verstellrichtung codiert ist

und wobei die Decodier- und Steuerschaltung (13) gemäß dem bei Betätigung der Hebelhandhabe (19, Fig. 3) anliegenden Binärcode über Steuerleitungen die Verstelleinrichtungen betreibt.

2. Steuereinheit nach Anspruch 1 ,

**dadurch gekennzeichnet,**

daß die Decodier- und Steuerschaltung (13) Teil einer Spiegelstellungs-Speicherschaltung (Memory) ist.

3. Steuereinheit nach Anspruch 1 oder 2 mit optischer Kennzeichnung der anliegenden stabilen Schaltstellung der Hebelhandhabe und einer sechsten Anschlußklemme ,

**dadurch gekennzeichnet,**

daß die sechste Anschlußklemme (11) der Schalteranordnung (1) mit einem dem Potential der gemeinsamen Anschlußklemme (6) wenigstens nach Betätigung eines Lichtschalters (12.1) entgegengesetzten elektrischen Potential gespeist wird

und daß zwischen die gemeinsame (6) und die sechste Anschlußklemme (11) eine Lichtquelle (12) geschaltet ist, welche durch ein Fensterfeld (21) in der Hebelhandhabe (19) scheinend deren Schaltstellung kenntlich macht.

**4.** Steuereinheit nach einem der vorstehenden Ansprüche mit Kennzeichnung der Schaltstellung der Hebelhandhabe,
**dadurch gekennzeichnet,**
daß die Hebelhandhabe (19) in einer Zeigerform ausgebildet ist, welche ein Ertasten ihrer Schaltstellung bzw. der Schaltstellung des Wählschalters (5) ermöglicht.

**5.** Steuereinheit nach einem der vorstehenden Ansprüche,
**dadurch gekennzeichnet,**
daß die Schaltbrücke des Wählschalters (5) aus zwei mechanisch gekoppelten beweglichen Kontaktstüken (5.3, 5.4) stets gleicher elektrischer Polarität besteht.

## Claims

**1.** A control unit for manually controlling at least four reversible electromechanical adjusting devices, particularly for motor vehicle rear-view mirrors, with a switch arrangement (1) consisting of a selector switch (5) switchable by means of a knob and of which the switching bridge, in one of three stable switch positions, bears on a first fixed contact (5.1) and in a second switch position bears on a second switch contact (5.2) of the selector switch (5) and, switchable by means of the same knob, three key switches (2, 3, 4) of which at least one first (2) and one second (3) are constructed as change-over switches, each having a switching bridge which, according to the direction of movement, can be switched to a first (2.1; 3.1) or to a second (2.2; 3.2) fixed contact, the switching bridge of the first change-over switch (2) being electrically permanently connected to the switching bridge of the selector switch (5) and, upon manual control of an adjusting device, being moved jointly with at least one other switching bridge of a key switch (2, 3, 4), with a common connecting terminal (6) which is electrically permanently connected to at least one fixed contact at each of the three key switches and with four further connecting terminals (7, 8, 9, 10) which are in each case individually permanently connected - to the first selector switch fixed contact (5.1) - to the second selector switch fixed contact (5.2) - with the switching bridge of the second (3) and - with the switching bridge of the third (4) key switch, characterised in that the switching bridge of the selector switch (5) of the switch arrangement (1), in the third and preferably middle switch position (IN) thereof, bears both on the first fixed contact (5.1) and also simultaneously on the second fixed contact (5.2) of the selector switch (5) and in that both the first fixed contacts (2.1; 3.1) and the second fixed contacts (2.2; 3.2) of the first (2) and of the second key switch (3) as well as the single fixed contact (4.1) of the third key switch (4) - which is closed in only one of two directions of movement - of the switch arrangement (1) are all permanently electrically connected to the common connecting terminal (6) and in that at least the four further connecting terminals (7, 8, 9, 10) are connected to a spatially remotely disposed decoding and control circuit (13) through a multi-core cable (14) for the transmission of a four-digit binary code with the symbol no potential" and "potential of the common connecting terminal (6)", and where, in two positions of the binary code - from the connecting terminals (7, 8) connected to the two fixed contacts (5.1, 5.2) of the selector switch (5) - the address of one of three rear view mirrors (15, 16 or 17) is coded with in each case two adjusting devices and in the other two positions - from the connecting terminals (9, 10) which are connected to the switching bridges of the second (3) or third (4) key switch - the particular adjusting device (15.1 , 15.2; 16.1, 16.2; 17.1, 17.2) addressed and its desired adjusting direction, the decoding and control circuit (13) driving the adjusting devices via control leads according to the binary code applied upon actuation of the knob (19, Fig. 3).

**2.** A control unit according to Claim 1, characterised in that the decoding and control circuit (13) is part of a mirror position memory circuit.

**3.** A control unit according to Claim 1 or 2 with optical recognition of the applied stable switch position of the control knob and of a sixth connecting terminal, characterised in that the sixth connecting terminal (11) of the switch arrangement (1) is fed with an electrical potential opposite to the potential of the common connecting terminal (6) at least after actuation of a light switch (12.1) and in that between the common (6) and the sixth connecting terminal (11) there is connected a light source 912) which displays the switch position of the knob (19) by showing it through a window area (21).

**4.** A control unit according to one of the preceding Claims with identification of the switch position of the control knob, characterised in that the control knob (19) is constructed in the form of a pointer which makes it possible to ascertain by touch the switch position of the knob or the switch position of the selector switch (5).

**5.** A control unit according to one of the preceding Claims, characterised in that the switching bridge of the selector switch (5) consists of two mechanically coupled movable contact pieces (5.3, 5.4) which are always of the same electrical polarity.

**Revendications**

**1.** Unité de commande pour l'actionnement manuel d'au moins quatre dispositifs électromécaniques de manoeuvre réversibles, notamment pour un rétroviseur de véhicule automobile, comportant :

- un ensemble de commutateurs (1) se composant d'un commutateur sélecteur (5) commutable au moyen d'une poignée et dont la barrette de commutation s'applique, dans l'une de trois positions stables de commutation, contre un premier contact fixe (5.1) du commutateur sélecteur (5), et dans une autre position de commutation contre un second contact fixe (5.2) de ce commutateur, et de trois commutateurs détecteurs (2, 3, 4) commutables au moyen de la même poignée et dont au moins un (2) et un second (3) sont agencés comme des détecteurs alternatifs comportant respectivement une barrette de commutation pouvant être amenée, en fonction du sens de déplacement, contre un premier contact fixe (2.1, 3.1) ou contre un second contact fixe (2.2 ; 3.2),
- la barrette de commutation du premier commutateur alternatif (2) étant reliée électriquement en permanence avec la barrette de commutation du commutateur sélecteur (5) et, dans le cas d'une commande manuelle d'un dispositif de réglage, étant déplacée en commun avec au moins une autre barrette de commutation d'un commutateur-détecteur (2 ; 3 ; 4),
- une borne commune de connexion (6), qui est reliée électriquement en permanence avec au moins un contact fixe de chacun des trois commutateurs-détecteurs et avec quatre autres bornes de connexion (7, 8, 9, 10) qui sont chacune reliées individuellement en permanence :
  - . avec le premier contact fixe (5.1) du commutateur-sélecteur,
  - . avec le second contact fixe (5.2) du commutateur sélecteur,
  - . avec la barrette de commande du second (3) commutateur-détecteur, et
  - . avec la barrette de commutation du troisième commutateur-détecteur (4),
- caractérisée en ce que :
- la barrette de commutation du commutateur-sélecteur (5) de l'ensemble de commutateurs (1) s'applique, dans sa troisième position de commutation (IN), de préférence centrale, aussi bien contre le premier contact fixe (5.1) du commutateur-sélecteur (5) que simultanément contre son second contact fixe (5.2),
- aussi bien les premiers contacts fixes (2.1 ; 3.1) et les seconds contacts fixes (2.2 ; 3.2) du premier (2) et du second (3) commutateur-détecteur que l'unique contact fixe (4.1) du troisième commutateur-détecteur (4) - qui sera fermé seulement dans un des deux sens de déplacement - de l'ensemble de commutateurs (1) sont tous reliés électriquement en permanence avec la borne commune de connexion (6),
- et en ce qu'au moins les quatre autres bornes de connexion (7, 8, 9, 10) sont reliées à un circuit de décodage et de commande (13), placé spatialement dans une position éloignée, par l'intermédiaire d'un conducteur à quatre brins (14) en vue de la transmission d'un code binaire à quatre positions avec les signes "pas de potentiel" et "potentiel de la borne commune de connexion (6)-",
- et dans deux positions du code binaire :
  - . à partir des bornes de connexion (7, 8) qui sont reliées aux deux contacts fixes (5.1, 5.2) du commutateur-sélecteur (5), l'adresse d'un de trois rétroviseurs (15, 16 ou 17) comportant chacun deux dispositifs de manoeuvre est codée
  - . et dans les deux autres positions - à partir des bornes de connexion (9, 10) qui sont reliées aux barrettes de commutation du second (3) ou du troisième (4) commutateur-détecteur -, le dispositif de manoeuvre respectivement sollicité (15.1, 15.2 ; 16.1, 16.2 ; 17.1, 17.2) et son sens de manoeuvre désiré sont codés,
- et le circuit de décodage et de commande (13) assure l'activation des dispositifs de manoeuvre en correspondance au code binaire introduit lors de l'actionnement de la poignée de manoeuvre (19, figure 3) et par l'intermédiaire de conducteurs de commande.

**2.** Unité de commande selon la revendication 1, caractérisée en ce que le circuit de décodage et de commande (13) fait partie d'un circuit de mémorisation (mémoire) de positions de rétroviseurs.

**3.** Unité de commande selon la revendication 1 ou 2, avec caractérisation optique de la position stable de commutation de la poignée de manoeuvre et d'une sixième borne de connexion, caractérisée en ce que la sixième borne de connexion (11) de l'ensemble de commutateurs (1) reçoit un potentiel électrique qui est opposé au potentiel de la borne commune de connexion (6) au moins après actionnement d'un commutateur de phares (12.1) et en ce qu'il est prévu entre la borne commune de connexion (6) et la sixième borne de connexion (11) une source de lumière qui rend visible sa position de commutation par éclairement à travers une fenêtre (21) prévue dans la poignée de manoeuvre (19).

**4.** Unité de commande selon une des revendications précédentes, avec caractérisation de la position de commutation de la poignée de manoeuvre, caractérisée en ce que la poignée de manoeuvre (19) est agencée en forme d'aiguille qui permet une détection de sa position de commutation ou de la position de commutation du commutateur-sélecteur (5).

**5.** Unité de commande selon une des revendications précédentes, caractérisée en ce que la barrette de commutation du commutateur-sélecteur (5) se compose de deux éléments de contact (5.3, 5.4) mobiles, accouplés mécaniquement et ayant constamment la même polarité électrique.

# Fig. 1
## (Stand der Technik)

# Fig. 2

# Fig.3